# EUROPEAN PATENT APPLICATION

(11) **EP 2 887 474 A1**
(43) Date of publication of application: **24.06.2015**
(21) Application number: 13199235.6
(22) Date of filing: 20.12.2013
(51) Int. Cl.: H02G 1/10, F03B 13/10, F03B 13/26

(54) **A method of managing a hydroelectric turbine array**

(71) Applicant: Openhydro IP Limited, Dublin 2 (IE)
(72) Inventor: Dunne, Paul, Dublin, 9 (IE); Ives, James, Dublin, 2 (IE)
(74) Representative: O'Neill, Brian

(57) **Abstract**

The present invention provides a method of managing a hydroelectric turbine array comprising installing a plurality of subsea foundations on a subsea surface and positioning interconnecting electrical cables between two or more of the subsea foundations, which cables then remain in position on the seabed during the operation of the array while allowing other components such as turbines to be removed for repair or the like without disturbing said cables..

## Description

### Field of the invention

The present invention is concerned with a method of managing a hydroelectric turbine array, and in particular a method which allows a hydroelectric turbine array to be deployed onto the seabed in an efficient sequence of steps while also ensuring that the array can be subsequently managed, for example removing a turbine for repair or replacement, with the minimum of disruption to the operation of the remainder of the array.

### Background of the invention

The use of subsea hydroelectric turbines for the generation of electricity is an area of technology that has become increasingly significant, and as such turbines are now seen as a viable component in the ever expanding renewable energy sector.

As a result there are a now a large number of active pilot projects conducting research and development on various designs of turbines, foundations for the turbines, in addition to methodologies for deploying and/or retrieving the turbines from the seabed or other desired installation site. Very few of these projects have reached maturity and progressed to commercial maturity, which will, in order to be financially viable, require the installation of multiple turbines, preferably in a tidal turbine array similar to the arrays of wind turbines which are now a common sight across the globe, both on and off shore.

The installation and maintenance of such tidal turbine arrays presents many practical problems to be addressed or overcome before deploying, operating and maintaining such arrays becomes commercially viable.

It is therefore an object of the present invention to provide a method of deploying a hydroelectric turbine array.

### Summary of the Invention

According to the present invention there is provided a method of managing a hydroelectric turbine array, the method comprising
installing a plurality of subsea foundations on a subsea surface; and
positioning interconnecting electrical cables between two or more of the subsea foundations.

Preferably, the method comprises the step of positioning a power transmission cable between one of the subsea foundations and a remote electrical substation.

Preferably, the method comprises the step of establishing an electrical and/or mechanical connection between each end of each electrical cable and the respective subsea foundation.

Preferably, the method comprises the step of providing an electrical subsystem on one or more of the foundations.

Preferably, the method comprises providing power conditioning equipment as the electrical subsystem.

Preferably, the method comprises, in the step of positioning interconnecting electrical cables, positioning the cables such that, in use, an electrical output associated with each foundation is processed by at least one of the electrical subsystems.

Preferably, the method comprises retrieving one or more of the electrical subsystems from the subsea surface while leaving the respective foundation and electrical cabling undisturbed.

Preferably, the method comprises the steps of
providing a hydroelectric turbine on one or more of the subsea foundations before or after positioning the interconnecting electrical cables;
and securing the turbine to the respective foundation.

Preferably, the method comprises the step of establishing an electrical connection between each turbine and the respective foundation.

Preferably, the step of deploying and/or securing the turbine to the foundation establishes the electrical connection between the turbine and foundation.

Preferably, the method comprises retrieving one or more of the turbines from the subsea surface while leaving the respective foundation and electrical cabling undisturbed.

Preferably, the method comprises utilising a first vessel to deploy the cabling and a second vessel to the foundations and/or turbines and/or electrical subsystems.

Preferably, the method comprises, in the step of deploying the foundations and/or turbines and/or electrical subsystems, lowering the foundations and/or turbines and/or electrical subsystems from a deployment vessel.

Preferably, the method comprises, in the step of deploying one or more of the foundations,
securing the foundation to a guide vehicle;
deploying the guide vehicle towards the subsea surface;
releasing the foundation from the guide vehicle.

Preferably, the method comprises installing an electrical connection hub on the subsea surface as one of the subsea foundations;
installing one or more subsea bases, adapted to support a hydroelectric turbine thereon, around the connection hub as further subsea foundations;
positioning the interconnecting electrical cables to facilitate the establishment of an electrical connection between the hub and each base.

Preferably, the method comprises securing an electrical subsystem to a support;
deploying the support onto the hub;
and securing the support to the hub.

Preferably, the method comprises, in the step of deploying the support and/or turbines,
securing the support or turbine to a guide vehicle;
deploying the guide vehicle towards the hub or base;
utilising the guide vehicle to effect alignment between the hub and support or turbine and base.

Preferably, the method comprises the step of establishing an electrical connection between each electrical cable and the hub and respective subsea base, wherein the step of deploying and/or securing the support to the hub establishes the electrical connection between the hub and the electrical cables.

Preferably, the method comprises the step of:
arresting the displacement of the guide vehicle, when substantially aligned with the hub or base, through contact with the hub or base of a buffer mounted to or formed integrally with the guide vehicle.

Preferably, the method comprises, in the step of securing the foundation, support or turbine to the guide vehicle, connecting a plurality of couplers on the guide vehicle with a corresponding plurality of couplers on the foundation, support or turbine.

Preferably, the method comprises the step of performing the method in a running tide; and positioning the guide vehicle down tide of the hub or base prior to advancing the guide vehicle into position about the hub or base.

### Brief description of the drawings

The present invention will now be described with reference to the accompanying drawings, in which:
Figure 1 illustrates a number of foundations forming part of a hydroelectric turbine array according to the present invention, the array being in the initial stages of deployment onto the seabed;
Figure 2 illustrates the hydroelectric turbine array of Figure 1 with a network of electrical cabling having been laid as part of the array;
Figure 3 illustrates the array of Figures 1 and 2 with a plurality of hydroelectric turbines having been deposited onto the foundations on the seabed;
Figure 4 illustrates a deployment vessel used in various phases of the deployment and potentially the recovery of the components of the turbine array;
Figure 5 illustrates a perspective view of a deployment vehicle forming part of the deployment vessel illustrated in Figure 4;
Figure 6 illustrates an electrical connection hub forming part of the turbine array illustrated in Figures 1 to 3;
Figure 7 illustrates the connection hub illustrated in Figure 6 with various cable connections having being laid thereto;
Figure 8 illustrates an electrical subsystem mounted on a support for connection to the hub illustrated in Figure 6;
Figure 9 illustrates the electrical subsystem and support being deployed onto the connection hub by means of the deployment vehicle illustrated in Figure 5;
Figure 10 illustrates the combined substation and hub illustrated in Figure 10 with the deployment vehicle illustrated in Figure 5 being raised upward away following deployment of the substation; and
Figure 11 illustrates the combined substation and hub shown in Figure 11, including additional detail related to cable management and connection at the hub.

### Detailed description of the invention

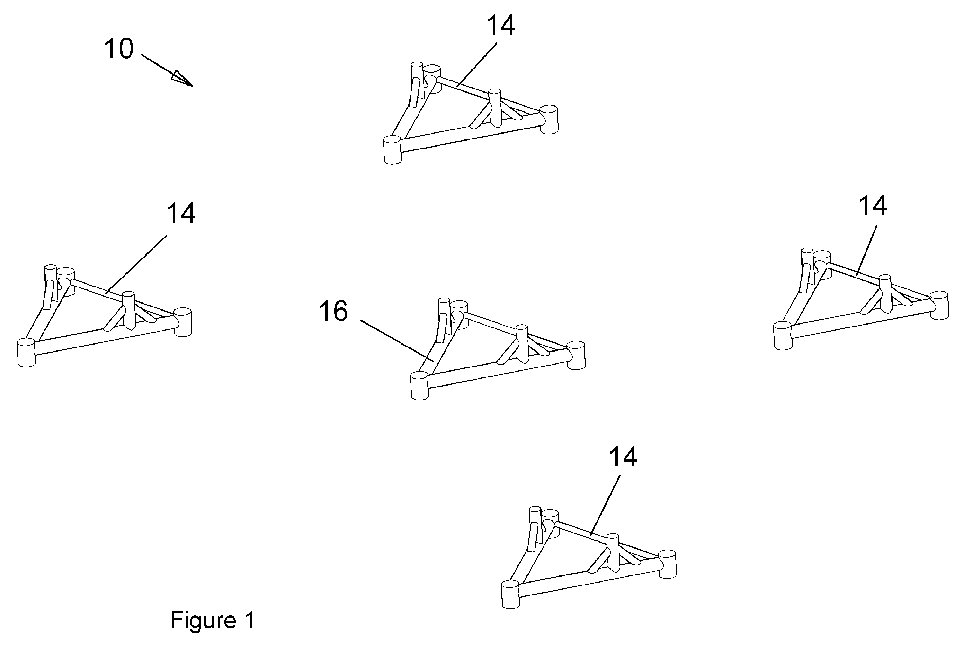

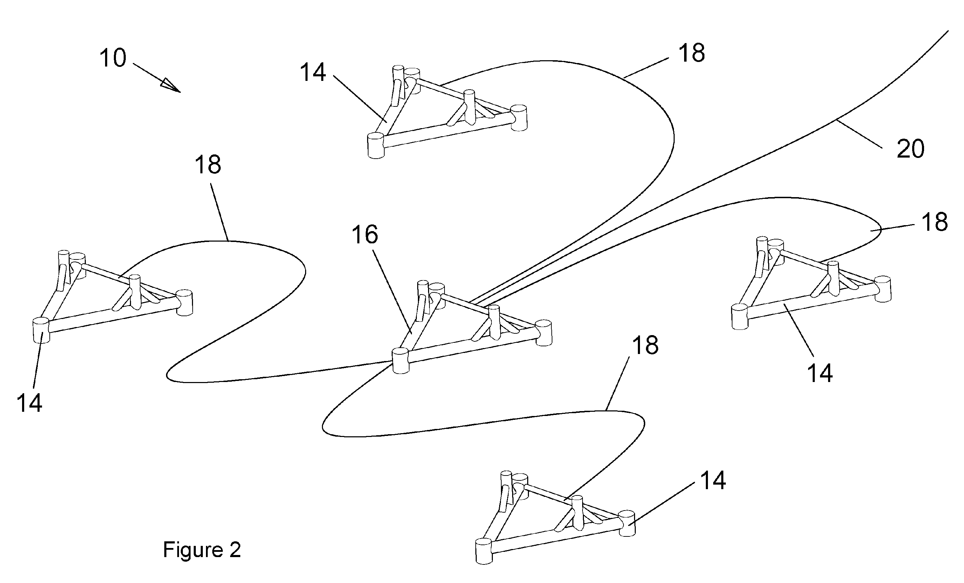

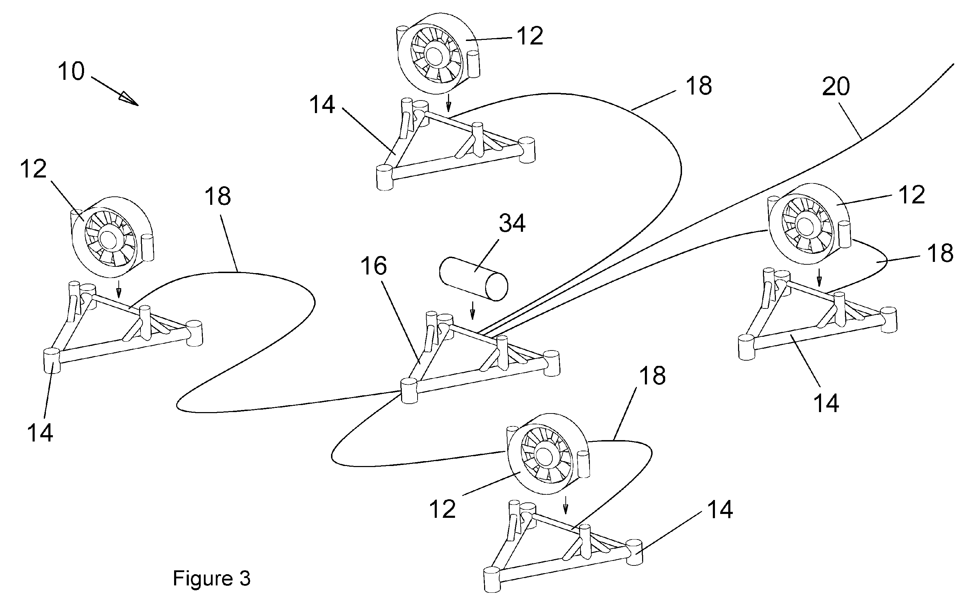

Referring now to the accompanying drawings there is illustrated a hydroelectric turbine array, generally indicated as 10 and shown partially in Figures 1 and 2, and fully in the Figure 3, for use in generating commercial levels of electricity from the tidal flow of water passed the array 10. The generated electricity is preferably transmitted ashore for use in any suitable application, for example for supply to a national grid or the like.

The invention concerns a method of managing the array 10, including the initial deployment of the array 10 onto the seabed, such that the array 10 can be both deployed in an efficient manner while also enabling the array 10 to be subsequently managed, for example removing a turbine for repair or replacement, with the minimum of disruption to the operation of the remainder of the array 10. The initial deployment of the array 10 may thus for example be performed in a staged or modular fashion, whereby a first set of components of the array 10 may be deployed during one operation, a second set of components in a second operation, and so on. Such a methodology also facilitates the use of different deployment hardware such as vessels or the like for the various steps in the deployment operation, as described in greater detail hereinafter.

The array 10 comprises a plurality of hydroelectric turbines 12 which may be of various size, design and electrical capacity, each turbine 12 being mounted, in the embodiment illustrated, on a foundation in the form of a subsea base 14 in order to support the turbine 12 at a predefined deployment site on a subsea surface, most preferably the seabed. The turbines 12 preferably comprise a fixed outer stator and a rotatable rotor captured within the stator and rotatable in response to the passage of water through the rotor. Rotation of the rotor results in relative movement between the stator and rotor which is used to generate electricity in known fashion, for example by providing an array of magnets on the rotor and an array of coils on the stator. The turbines 12 may however be of any other suitable configuration operable to generate electricity in response to the tidal flow of water passed the turbine 12.

As with the turbines 12 the bases 14 may be of any suitable design which is capable of providing the above mentioned supporting function to the turbines 12. In the preferred embodiment the bases 14 are so called "gravity" bases 14, meaning that the bases 14 are retained in position on the seabed purely under the influence of gravity, with no piling or other conventional methods of fastening structures to the seabed. The bases 14 are however preferably designed to allow the turbines 12 to be installed, and preferably retrieved, while the bases 14 remain in position on the seabed. This approach, while not essential to the invention, does provide a number of advantages as described in detail hereinafter, primarily in connection with the initial cable management about the array 10, and the subsequent management or maintenance of the turbines 12 without requiring interference with the respective base 14 when a turbine 12 is to be recovered. This permits the minimum of disruption to the remainder of the array 10, which can therefore preferably continue generating electricity even when one or more of the turbines 12 have been removed.

The turbine array 10, in the embodiment illustrated, further comprises a hub 16 which acts, in use, as an electrical connection node to which the array of turbines 12 are individually electrically connected, via a respective interconnecting cable 18, and from which hub 16 a single power transmission cable 20 may then be connected to a remote electrical substation (not shown), preferably on land and thus to which all of the electricity generated by the turbines 12 is supplied. The hub 16 may be of any suitable form, and in the embodiment illustrated comprises a triangular frame 22 having a tripod of legs 24 which thus allow the hub 16 to sit stably on the seabed, preferably purely as a gravity based installation requiring no piling or other seabed preparation and/or connection, thereby minimising the work involved in deploying the hub 16 onto the seabed. While the illustrated embodiment shows the hub 16 being directly connected to each of the turbines 12 it is to be understood that the array 10 could be configured to incorporate one or more turbines which are indirectly connected to the hub 16, for example by being connected through an intermediate turbine which is then directly connected to the hub 16. In use, and as will be described in greater detail hereinafter, the hub 16 carries power conditioning hardware by which the generated electricity from each turbine 12 is processed, for example for conversion from AC to DC and/or to step up the voltage in order to facilitate transmission of the electricity over the relatively long distances to shore or the like. However it is also envisaged that such power conditioning hardware could be provided on or about each turbine 12 and base 14 combination, in order to permit the local or discrete processing of the electricity generated by the respective turbine 12. In such a scenario it may be possible to omit the hub 16 from the array 10, and to connect the plurality of turbines 12 in parallel, with one of the combined turbine 12 and base 14 installations being used as a transmission point from which the electricity generated by the array 10 is transferred ashore. In this way a single power transmission cable may still be employed, despite the omission of the central hub 16.

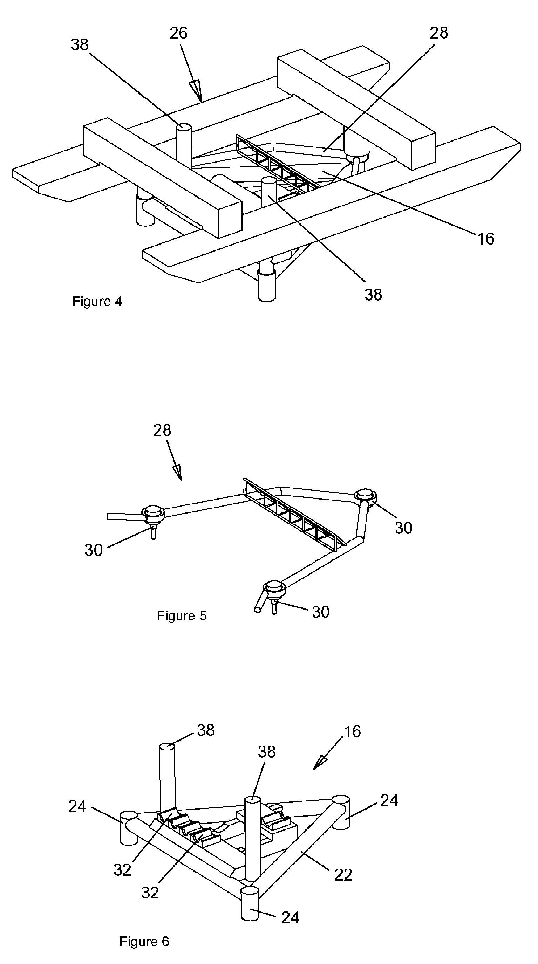

The hub 16, in the embodiment illustrated, is similar in shape and dimension to the plurality of bases 14, thereby enabling both the bases 14 and the hub 16 to be deployed into position on the seabed using the same deployment vessel 26, which deployment vessel 26 is illustrated in Figure 4. This reduces both the cost and complexity of installing the various components of the turbine array 10.

In use once a deployment site has been selected and the individual locations for the bases 14 and hub 16 have been established, the bases 14 and hub 16 are individually lowered into position on the seabed. Each of the above mentioned components is individually secured to the deployment vessel 26, preferably by means of a guide vehicle in the form of a transport frame 28 which in the embodiment illustrated is suspended beneath the deployment vessel 26, preferably by means of a number of lowering lines which are winch wound and thus adapted to raise and lower the transport frame 28 from beneath the deployment vessel 26. The components and/or the transport frame 28 could conceivably be secured by and to the deployment vessel 26 in a position fully or partially elevated out of the water, for example within a central portal or opening formed in the vessel 26, such that while the components or transport frame 26 would not then be secured or located "beneath" the vessel 26, said components and/or frame 26 can still be lowered into such a position in order to benefit from the advantages of such a deployment position. The lowering lines may also carry power, whether electric, hydraulic, pneumatic or the like, from the vessel 26 to the frame 28, for reasons set out hereinafter. It is however preferred that a dedicated power line or umbilical (not shown) is provided between the deployment vessel 26 and the frame 28. The frame 28, in the embodiment illustrated, is manufactured from tubular steel, although it will be appreciated that the materials and design may vary once retaining the underlying functionality as described hereinafter.

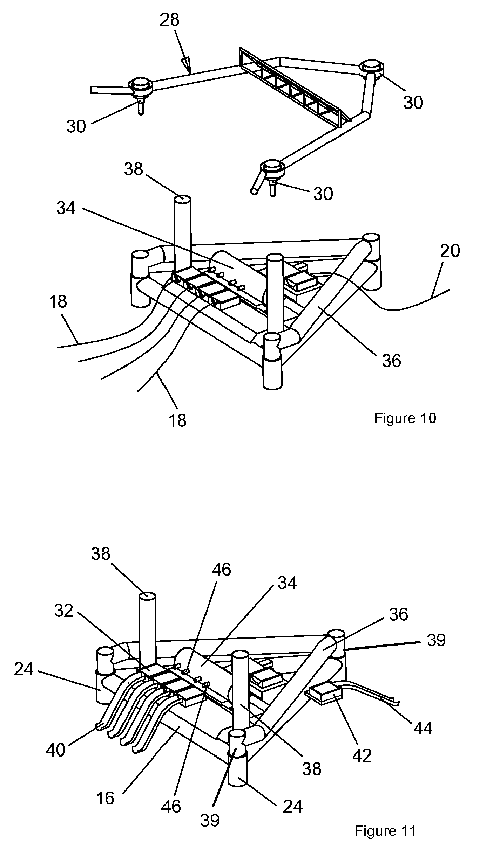

Referring in particular to Figures 5 and 10 it can be seen that the frame 28 is substantially u-shaped in plan and includes a pair of opposed arms that, in the latter half thereof, taper towards one another and are connected at an apex. Each of the arms terminates in a fixed or immovable guide that curves outwardly away from a longitudinal axis of the frame 28. The free ends of the arms, as defined by the guides, define a mouth of the frame 28 that opens into a docking space or enclosure defined by the frame 28. This docking space terminates, in the direction of the longitudinal axis of the frame 28, at a further guide in the form of a cross member that extends laterally between the pair of arms of the frame 28. The cross member acts as a buffer which, in one aspect makes contact with the outer face of the turbine 12 as the frame 28 is advanced into position during a retrieval of the turbine 12 from the respective base 14, in order to prevent the frame 28 from being advanced beyond its intended position.

In the embodiment illustrated the transport frame 28 comprises releasable locking means in the form of three ball grabs 30 which are insertable into the hollow legs 24 of both the bases 14 and the hub 16 and which can be actuated in order to grip the interior of the legs 24 in order to retain the hub 16 or base 14 directly beneath the transport frame 28, and thus indirectly beneath the vessel 26. It will be appreciated that any other suitable functional alternative may be provided for the ball grabs 30, in addition to the lowering lines and winches. This method of deployment, including a detailed explanation of the operation of the ball grabs 30, is described and shown in earlier European patent application no. 10190576.8.

With the base 14 or hub 16 secured to the transport frame 28 the vessel 26 is transported to the deployment site, whether by means of a barge towing the vessel 26, or through direct drive means (not shown) provided on the vessel 26. Once at the deployment site the transport frame 28, carrying the under slung base 14 or hub 16, is lowered downwardly away from the underside of the vessel 26 towards the seabed.

Once the base 14 or hub 16 comes to rest on the seabed, and the suitability of the installation has been established, the ball grabs 30 are released, whether through remote hydraulic actuation or otherwise, and the transport frame 28 raised upwardly away from the base 14 or hub 16. The vessel 26 can now return to the dock or other staging post in order to collect the additional bases 14 or the hub 16 to be installed as part of the array 10.

The installation procedure for each of the bases 14 is essentially identical to that for the hub 16, utilising the vessel 26 and transport frame 28 in order to lower each base 14 into position onto the seabed around the hub 16, or at suitable positions relative to one another if the hub 16 does not form part of the array 10. Utilising the same vessel 26 for each of the aforementioned components of the array 10 significantly reduces the cost and complexity of the deployment of these components. For this reason it is preferable that the hub 16 and bases 14 are of similar design, in order for both to be transportable and deployable by the vessel 26 and frame 28. Thus each base 14 again comprises three legs which are hollow at an upper end in order to receive the respective ball grab 30 and allow the base to be securely retained beneath the frame 28 and vessel 26, and to be lowered on the frame 28 from beneath the vessel 26 on to the seabed. The bases 14 and hub 16 can therefore be laid on the seabed as a first stage or phase of the deployment of the array 10, as illustrated in Figure 1. It is however envisaged that one or more of the above mentioned components could be deployed onto the seabed or other deployment location by means of any other suitable equipment such as one or more conventional crane based vessels or the like.

Once the hub 16 and plurality of bases 14 have been deployed onto the seabed, the next step in the method for deploying the turbine array 10 is to locate the interconnecting cables 18, which in the embodiment illustrated are laid one between each base 14 and the hub 16. For this step it is preferable that a dedicated cable laying vessel (not shown) is employed, as submarine cable laying generally requires a larger and more specialist vessel than the deployment vessel 26. It is also preferable that each length of interconnecting cable 18 is electrically connected at one end to the hub 16 and at the opposed end to the base 14, as opposed to being electrically connected directly to the respective turbine 12. In this way the method of deployment allows the bases 14 and hub 16, along with the interconnecting cables 18, to be laid once at the start of the deployment project, and the turbines 12, following installation, can be independently removed for maintenance or upgrading without having to manage the interconnecting cables 18 or the bases 14. This is a significant advantage as the management of sub sea cables and their routing on the seabed is a difficult and time consuming operation. In a particularly preferred arrangement one ore more of the cables 18 are laid substantially in line with the direction of the prevailing tide, in order to attempt to minimise tidal forces, during use, acting on the cables 18 in order to prevent or reduce unwanted displacement or deformation of the cables 18.

Once each of the interconnecting cables 18 has been laid between the hub 16 and the respective base 14 an electrical connection must be established at either end with the respective hub 16 or base 14. This final electrical connection of the cable 18, or the individual cores (not shown) within the cable 18, may for example be made by a diver, a remotely operated vehicle (ROV), or for example at the hub 16 when an additional component is subsequently installed as part of the array 10, and as will be described in detail hereinafter. Referring to the base 14, in the embodiment illustrated a plurality of terminals 32 are provided, each adapted to receive an end of one of the interconnecting cables 18. The terminals 32 may be adapted to enable the above mentioned direct termination of the respective cable 18 locally by a diver, ROV or the like. Alternatively the terminals 32 may be adapted to automatically establish the final electrical connection with the end of the cables 18 when a further component of the array 10 is connected to the hub 16.

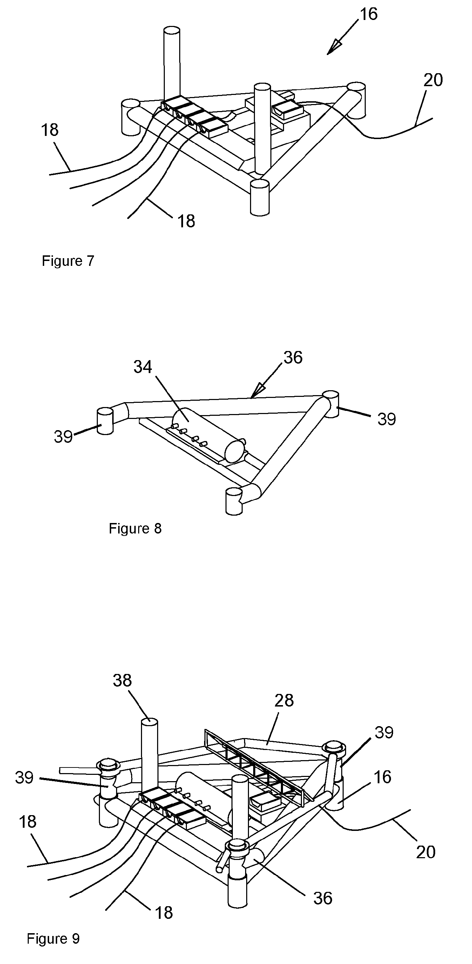

Thus referring in particular to Figures 8 to 10, the turbine array 10 preferably additionally comprises an electrical subsystem 34, which may for example comprise rectifying circuitry, step up transformers in order to increase the voltage for transmission ashore, or power conditioning components to render the power output from the turbines 12 grid compliant before transmission to shore. The electrical subsystem 34 may be adapted for direct connection to the hub 16, although in the embodiment illustrated the subsystem 34 is pre-connected to a support 36 which is itself adapted to be connected to the hub 16, and also preferably adapted to be lowered into position onto the hub 16 by means of the vessel 26 and transport frame 28. However as mentioned above each turbine 12 or base 14 may be provided with dedicated local power conditioning hardware (not shown).

The support 36 is provided with three legs 39 which are positioned to be engagable by the ball grabs 30 of the transport frame 28. Thus the support 36 and connected subsystem 34 may be secured beneath the vessel 26 as hereinbefore described with reference to the hub 16 and bases 14, and transported to the deployment site. The exact position of the hub 16 is known, and is maintained using GPS and possibly a marker buoy for reference or by Dynamic Positioning (DP) on the surface of the sea above the deployment site. The vessel 26 can then be accurately positioned relative to the hub 16.

On reaching the hub 16 the vessel 26 is preferably positioned slightly downstream or down tide of the hub 16 relative to the direction of tidal flow. The frame 28 is then lowered on the lowering lines until the frame 28 is at the same horizontal co-ordinate as the hub 16. By deploying the frame 28 during a running tide and directly down tide of the hub 16 the flow of the tide will be in a direction substantially parallel with the longitudinal axis of the frame 28. The tidal flow of water past the frame 28 will tend to maintain the correct alignment of the frame 28 relative to the hub 16. By advancing the vessel 26 and frame 28 from a down tide position, a failsafe is then built into the operation in the event of a power loss to the barge or tug, which will result in the frame 28 drifting away from the hub 16 and thus avoiding the possibility of the frame 28 contacting and damaging the hub 16.

At this point the frame 28 is advanced towards the hub 16, preferably in a direction substantially parallel with the longitudinal axis of the frame 28, and with the mouth leading. It is preferable that the frame 28 is provided with a number of sensors (not shown) for monitoring the position/condition of the frame 28 during the deployment operation. These sensors may be in the form of one or more cameras or imaging sonar, in order to provide visual feedback during the operation, even when the water is not clear, has high turbidity, or during night time operations.

The frame 28 will thus slowly approach the hub 16, and if there is any misalignment between the two the pair of guides on the arms of the frame 28 will contact a pair of uprights 38 provided on the hub 16, which in combination serve to gently correct the position of the frame 28 such that the support 36 is brought into correct alignment above the hub 16. The horizontal displacement of the frame 28 above the hub 16 continues until the cross member contacts the uprights 38 as illustrated in Figure 7, thereby arresting the further horizontal displacement of the frame 28. The cross member is positioned such that when it contacts the uprights 38 the legs 39 of the support 36 will be positioned directly above the legs 24 of the base 16. It is preferable, at this stage, to advance the vessel 26 slightly up tide in order to place some tension in the lowering lines in order to hold the frame 28 securely against the uprights 38. Due to turbulence and/or fluctuations in the velocity of the tidal flow, an increase in the velocity may temporarily displace the frame 28 down tide of the hub 16, and once the increased tidal flow reduces the frame 28 would then swing back towards and contact the uprights 38 or other portion of the hub 16. This swinging of the frame 28 may therefore result in damage to the hub 16 or the frame 28. By placing tension in the lowering lines the frame 28 will be held securely against the hub 16.

At this point the vessel 26 is halted and maintained in position directly above the hub 16. The lowering lines are then used to slowly lower the frame 28 in the vertical direction, such that the support 36 is fully lowered into position onto the hub 16, at which point the winches lowering the frame 28 are stopped.

Once the support 36 is correctly mounted on the hub 16 the ball grabs 30 may be released and the transport frame 28 drawn upwardly away from the combined hub 16 and support 36. The legs of the support 36 and the base 16 are preferably designed to interlock as the support 36 is lowered onto the hub 16, although any other suitable means of securing the two components together may be employed. Referring in particular to Figure 11, the hub 16 is now ready for the electrical cables 18, 20 to be electrically connected. The terminal end of each of the various interconnecting cables 18 is thus located and secured with the respective terminal 32 on the hub 16, a guide 40 preferably extending outwardly and downwardly from the terminal 32 in order to immobilise the end of the cable 18 directly adjacent the terminal 32. This will prevent, in use, unwanted movement of the cable 18 which might over time lead to an electrical fault at the terminal 32. Similarly the power transmission cable 20 is terminated in a terminal 42 which is again provided with a dedicated guide 44 to immobilise the end of the cable 20 adjacent the terminal 42.

The support 36 preferably carries the subsystem 34 at a position in which a pair of electrical connections 46 for the subsystem 34 are aligned with the terminals 32 once the support 36 is secured in position on the hub 16. In this way, once the cables 18 have been connected to the terminals 32 it will then be a relatively straightforward matter to provide a short length of connecting cable (not shown) between the terminals 32 and the connections 46. This may be performed by divers, an ROV, or by any other suitable means.

As an alternative, and as mentioned above, the act of engaging the support 36 with the hub 16 may be utilised to establish the electrical connection between the ends of the interconnecting cables 18 and the terminals 32. In this way no additional time or equipment is required in establishing these electrical connections.

The process of mounting the subsystem 34 to the support 36, which is then lowered and secured onto the hub 16, provides an unexpected benefit with respect to the vessel 26 used to deploy the array 10. As the hub 16 is designed to be maintained in position on the seabed purely under its own weight, it is thus necessary that the final weight of the hub 16 is sufficient to ensure a stable deployment on the seabed. However the weight of the hub 16 dictates the size of the vessel 26 necessary to achieve deployment, which can soon become so large that it has significant practical, financial and other drawbacks. By mounting the subsystem 34 to the support 36, the weight of the support 36 becomes part of the final weight of the hub 16, allowing a significantly larger weight to be achieved while still enabling the use of a practically sized vessel 26. Essentially the hub 16 and support 36 allow the final weight to be almost double that of the hub 16 in isolation, without any increase in the size of the components and thus without requiring a doubling in the size of the vessel 26 in order to achieve deployment.

At this point all of the electrical connections are established between the bases 14 and the hub 16, and the hub 16 and an onshore or other remote electrical substation to which the electricity is to be supplied. The plurality of turbines 12 can then be transported to and deployed onto the bases 14. However it is also envisaged that the turbines 12 could be deployed in a different sequence, for example locating the turbines 12 on the bases 14 before the cables 18, 20 are laid. The particular sequence chosen may be dictated by the availability of the particular vessels being utilised in the deployment process, or by any other criteria. The deployment of the turbines 12 is preferably carried out using the transport vessel 26 and optionally the transport frame 28, in order to lower each turbine 12 onto the respective base 14. As in the preferred embodiment illustrated the electrical connection between the hub 16 and base 14 is already established, it is preferable that the process of lowering the turbine 12 into register with the respective base 14 establishes a suitable electrical connection between the turbine 12 and base 14, such that electricity generated by the turbine 12 during operation is transferred through the base 14 and to the hub 16 via the interconnecting cable 18.

It is however envisaged that an electrical connection between the turbine 12 and the base 14 could be achieved by any other suitable means, for example locally by means of a diver, ROV or the like. However by automatically establishing the connection when the turbine 12 is lowered onto the base 14 the requirement for such local operations is avoided. Similarly when it is required to retrieve a turbine 12, for maintenance, repair or replacement, it is preferable that the act of drawing the turbine 12 off the base 14 will automatically break the electrical connection between the turbine 12 and respective base 14. This again reduces the cost and complexity of any such recovery operation.

The method of managing the hydroelectric turbine array 10 allows a modular or sequential deployment of the various components of the array 10, while also facilitating the subsequent maintenance of individual turbines 14 within the array with minimal disruption to the operation of the remainder of the array 10.

## Claims

1. A method of managing a hydroelectric turbine array, the method comprising
installing a plurality of subsea foundations on a subsea surface; and
positioning interconnecting electrical cables between two or more of the subsea foundations.

2. A method according to claim 1 comprising the step of positioning a power transmission cable between one of the subsea foundations and a remote electrical substation.

3. A method according to any preceding claim comprising the step of establishing a mechanical and/or electrical connection between each end of each electrical cable and the respective subsea foundation.

4. A method according to any preceding claim comprising the step of providing an electrical subsystem on one or more of the foundations.

5. A method according to claim 4 comprising providing power conditioning equipment as the electrical subsystem.

6. A method according to claim 4 or 5 comprising, in the step of positioning interconnecting electrical cables, positioning the cables such that, in use, an electrical output associated with each foundation is processed by at least one of the electrical subsystems.

7. A method according to any preceding claim comprising the steps of
providing a hydroelectric turbine on one or more of the subsea foundations before or after positioning the interconnecting electrical cables;
and securing the turbine to the respective foundation.

8. A method according to claim 7 comprising the step of establishing an electrical connection between each turbine and the respective foundation.

9. A method according to claim 8 in which the step of deploying and/or securing the turbine to the foundation establishes the electrical connection between the turbine and foundation.

10. A method according to any of claims 7 to 9 comprising retrieving one or more of the turbines from the subsea surface while leaving the respective foundation and electrical cabling undisturbed.

11. A method according to any preceding claim comprising utilising a first vessel to deploy the cabling and a second vessel to deploy the foundations and/or turbines.

12. A method according to any preceding claim comprising, in the step of deploying the foundations and/or turbines, lowering the foundations and/or turbines from a deployment vessel.

13. A method according to any preceding claim comprising, in the step of deploying one or more of the foundations,
securing the foundation to a guide vehicle;
deploying the guide vehicle towards the subsea surface;
releasing the foundation from the guide vehicle.

14. A method according to any preceding claim comprising
installing an electrical connection hub on the subsea surface as one of the subsea foundations;
installing one or more subsea bases, adapted to support a hydroelectric turbine thereon, around the connection hub as further subsea foundations;
positioning the interconnecting electrical cables to facilitate the establishment of an electrical connection between the hub and each base.

15. A method according to claim 14 comprising
securing an electrical subsystem to a support;
deploying the support onto the hub;
and securing the support to the hub.

16. A method according to any claim 15 comprising, in the step of deploying the support and/or turbines,
securing the support or turbine to a guide vehicle;
deploying the guide vehicle towards the hub or base;
utilising the guide vehicle to effect alignment between the hub and support or turbine and base.

17. A method according to claim 15 or 16 comprising the step of establishing an electrical connection between each electrical cable and the hub and respective subsea base, wherein the step of deploying and/or securing the support to the hub establishes the electrical connection between the hub and the electrical cables.

18. A method according to claim 16 comprising the step of:
arresting the displacement of the guide vehicle, when substantially aligned with the hub or base, through contact with the hub or base of a buffer mounted to or formed integrally with the guide vehicle.

19. A method according to any of claims 14 and 17 to 19 comprising, in the step of securing the foundation, support or turbine to the guide vehicle, connecting a plurality of couplers on the guide vehicle with a corresponding plurality of couplers on the foundation, support or turbine.

20. A method according to any of claims 17 to 20 comprising the step of performing the method in a running tide; and positioning the guide vehicle down tide of the hub or base prior to advancing the guide vehicle into position about the hub or base.
